# EUROPÄISCHE PATENTSCHRIFT

(11) **EP 1 243 881 B1**
(45) Veröffentlichungstag und Bekanntmachung des Hinweises auf die Patenterteilung: **26.10.2005**
(21) Anmeldenummer: 01117400.0
(22) Anmeldetag: 18.07.2001
(51) Int. Cl.: F25J 3/04

(54) **Drei-Säulen-System zur Tieftemperatur-Luftzerlegung**
Cryogenic triple column air separation system
Système de séparation d'air cryogénique à trois colonnes

(30) Priorität: 21.03.2001 DE 10113790
(43) Veröffentlichungstag der Anmeldung: 25.09.2002
(73) Patentinhaber: Linde Aktiengesellschaft, 65189 Wiesbaden (DE)
(72) Erfinder: Pompl, Gerhard, Dipl.-Ing., 92339 Beilngries (DE)
(74) Vertreter: Imhof, Dietmar

(56) Entgegenhaltungen:
- EP-A- 0 770 841
- EP-A- 1 094 286
- US-A- 2 502 250
- US-A- 4 433 989

## Beschreibung

Die Erfindung betrifft ein Verfahren zur Tieftemperatur-Luftzerlegung mit einem Drei-Säulen-System gemäß dem Oberbegriff des Patentanspruchs 1. Das Drei-Säulen-System weist eine Hochdrucksäule, eine Niederdrucksäule und eine Mitteldrucksäule auf. Die Mitteldrucksäule dient zur Auftrennung einer ersten sauerstoffangereicherten Fraktion aus der Hochdrucksäule, insbesondere zur Erzeugung von Stickstoff, der in verflüssigter Form als Rücklauf in der Niederdrucksäule eingesetzt oder als Produkt abgezogen wird.

Die Grundlagen der Tieftemperaturzerlegung von Luft im Allgemeinen sind in der Monografie "Tieftemperaturtechnik" von Hausen/Linde (2. Auflage, 1985) und in einem Aufsatz von Latimer in Chemical Engineering Progress (Vol. 63, No.2, 1967, Seite 35) beschrieben. Bei dem Drei-Säulen-System bilden Hochdrucksäule und Niederdrucksäule vorzugsweise eine Linde-Doppelsäule, das heißt diese beiden Säulen stehen über einen Hauptkondensator in wärmetauschender Verbindung. (Die Erfindung ist jedoch grundsätzlich auch bei anderen Anordnungen von Hochdrucksäule und Niederdrucksäule und/oder anderen Kondensator-Konfigurationen anwendbar.) Im Gegensatz zum klassischen Linde-Zwei-Säulen-Prozess wird bei dem Drei-Säulen-Verfahren nicht die gesamte sauerstoffangereicherte Flüssigkeit, die in der Hochdrucksäule gebildet wird, direkt in die Niederdrucksäule eingeleitet, sondern eine erste sauerstoffangereicherte Fraktion aus der Hochdrucksäule strömt in die Mitteldrucksäule und wird dort weiter vorzerlegt, und zwar unter einem Druck, der zwischen den Betriebsdrücken von Hochdrucksäule und Niederdrucksäule liegt. Kopfdampf der Mitteldrucksäule wird in indirekten Wärmeaustausch mit einem Kühlfluid gebracht und dabei mindestens teilweise kondensiert. Dabei erzeugter Flüssigstickstoff wird als zusätzlicher Rücklauf in dem Drei-Säulen-System verwendet und/oder als Flüssigprodukt gewonnen. Es ist zum Beispiel bekannt, Sumpfflüssigkeit der Hochdrucksäule, Sumpfflüssigkeit der Mitteldrucksäule, eine Zwischenflüssigkeit der Mitteldrucksäule, Sumpfflüssigkeit der Niederdrucksäule oder eine Zwischenflüssigkeit der Niederdrucksäule als Kühlfluid zur Kondensation von Kopfgas der Mitteldrucksäule einzusetzen. Derartige Drei-Säulen-Prozesse sind beispielsweise in DE 1065867 B, DE 2903089 A, US 5692395, oder EP 1043556 A beschrieben.

In Ergänzung der drei genannten Säulen zur Stickstoff-Sauerstoff-Trennung können weitere Trenneinrichtungen vorgesehen sein, beispielsweise eine Rohargonsäule zur Sauerstoff-Argon-Trennung, eine Reinargonsäule zur Argon-Stickstoff-Trennung und/oder eine oder mehrere Säulen zur Krypton- und/oder Xenon-Gewinnung oder auch nicht-destillative Trenn- oder Nachreinigungsvorrichtungen. Drei-Säulen-Systeme mit zusätzlicher Rohargonsäule sind zum Beispiel aus dem oben genannten Artikel von Latimer, aus US 4433989, EP 147460 A, EP 828123 A oder EP 831284 A bekannt.

Der Erfindung liegt die Aufgabe zugrunde, ein Verfahren beziehungsweise eine Vorrichtung zur Tieftemperatur-Luftzerlegung mit Drei-Säulen-System anzugeben, das beziehungsweise die wirtschaftlich besonders günstig ist.

Diese Aufgabe wird dadurch gelöst, dass als Kühlfluid für die Kondensation des zweiten Stickstoff-Kopfgases aus der Mitteldrucksäule mindestens einer der beiden folgenden Prozess-Ströme eingesetzt wird:
- ein zweiter, verflüssigter Einsatzluftstrom und/oder
- eine Flüssigkeit von einer Zwischenstelle der Hochdrucksäule.

Hierdurch kann der indirekte Wärmeaustausch im Mitteldrucksäulen-Kondensator auf besonders effiziente Weise durchgeführt werden.

Die erste Variante des erfindungsgemäßen Verfahrens ist insbesondere bei Anlagen mit starker Vorverflüssigung von Luft anwendbar, also bei hoher Flüssigproduktion und/oder Innenverdichtung. Bei einem Innenverdichtungs-Prozess wird mindestens eines der Produkte (zum Beispiel Stickstoff aus Hochdrucksäule und/oder Mitteldrucksäule, Sauerstoff aus Mitteldrucksäule und/oder Niederdrucksäule) flüssig aus einer der Säulen des Drei-Säulen-Systems oder aus einem mit einer dieser Säulen verbundenen Kondensator entnommen, in flüssigem Zustand auf einen erhöhten Druck gebracht, in indirektem Wärmeaustausch mit dem zweiten Einsatzluftstrom verdampft beziehungsweise (bei überkritischem Druck) pseudo-verdampft und schließlich als gasförmiges Druckprodukt gewonnen. Die dabei oder bei einem anschließenden Entspannungsschritt verflüssigte Luft wird dann als Kühlfluid verwendet. Der verdampfte zweite Einsatzluftstrom wird vorzugsweise in die Niederdrucksäule eingeleitet. Die benötigte Flüssigluft (der zweite Einsatzluftstrom) kann auch bei Flüssiganlagen ohne Innenverdichtung in einem Luftkreislauf anfallen.

Unter "verflüssigter Einsatzluft" wird hier ein Strom verstanden, der unmittelbar durch Verflüssigung eines Teilstroms der Einsatzluft entstanden und danach keinen konzentrationsverändemde Maßnahme unterworfen worden ist. Zwischen Verflüssigung und Einleitung in den Verdampfungsraum der Mitteldrucksäulen-Kondensators wird insbesondere keine Phasentrennung vorgenommen.

Vorzugsweise ist der Kopfkondensator der Mitteldrucksäule als Fallfilmverdampfer ausgebildet. Dabei wird das Kühlfluid nur teilweise verdampft. Das resultierende Zwei-Phasen-Gemisch wird in eine Phasentrenneinrichtung eingeleitet, in der eine dampfförmige Fraktion und ein flüssig verbliebener Anteil voneinander getrennt werden. Die Verwendung eines Fallfilmverdampfers bewirkt eine besonders geringe Temperaturdifferenz zwischen Verflüssigungs- und Verdampfungsraum. Diese Eigenschaft trägt zur Optimierung der Drucks bei, unter dem die Mitteldrucksäule betrieben wird.

Das Kühlfluid muss in der Regel stromaufwärts des indirekten Wärmeaustauschs entspannt werden. Dieser Entspannungsschritt kann im Rahmen der Erfindung arbeitsleistend durchgeführt werden. Dazu wird beispielsweise der zweite Einsatzluftstrom in flüssigem oder überkritischem Zustand in eine Flüssigturbine eingeleitet, aus der er in vollständig flüssigem oder in im Wesentlichen vollständig flüssigem Zustand wieder austritt.

In vielen Fällen ist es günstig, der Mitteldrucksäule neben der ersten sauerstoffangereicherten Fraktion, die beispielsweise durch Sumpfflüssigkeit der Hochdrucksäule gebildet wird, eine zweite Einsatzfraktion zuzuführen. Dazu wird eine Zusatzfraktion, die eine andere Zusammensetzung als die erste sauerstoffangereicherten Fraktion aufweist, aus der Hochdrucksäule abgezogen und der Mitteldrucksäule zugespeist. Falls eine Zwischenflüssigkeit aus der Hochdrucksäule als Kühlfluid eingesetzt wird, kann ein Teil abgezweigt und der Mitteldrucksäule als weitere Einsatzfraktion zugeführt werden; die Zusatzfraktion und das Kühlfluid werden in diesem Fall von derselben Zwischenstelle der Hochdrucksäule abgezogen.

Das erfindungsgemäße Verfahren kann ohne Argongewinnung durchgeführt werden. Im letzteren Fall kann die Mitteldrucksäule mit jeder bekannten Methode beheizt werden, beispielsweise mittels Kondensation eines gasförmigen Stickstoffstroms aus der Hochdrucksäule, einer Zwischenfraktion aus der Hochdrucksäule oder eines. Teilstroms der Einsatzluft, oder auch mittels Übertragung fühlbarer Wärme aus einer sauerstoffangereicherten Flüssigkeit der Hochdrucksäule. Alternativ dazu kann die Sumpfheizung der Mitteldrucksäule mit rückverdichtetem Stickstoff betrieben werden, wie es in einer nicht vorveröffentlichten Anmeldung (deutsche Patentanmeldung 10103957.3 und dazu korrespondierende Anmeldungen) im Einzelnen erläutert ist

Das Drei-Säulen-System der Erfindung kann jedoch auf besonders günstige Weise mit einer Argongewinnung verbunden werden, indem dem Drei-Säulen-System eine Rohargonsäule nachgeschaltet ist, deren Kopfdampf in einem Rohargon-Kondensator kondensiert wird. Der Rohargon-Kondensator dient vorzugsweise gleichzeitig als Sumpfheizung der Mitteldrucksäule, indem Sumpfflüssigkeit der Mitteldrucksäule dort mindestensteilweise verdampft wird und dabei gebildeter sauerstoffangereicherter Dampf in die Mitteldrucksäule zurückgeleitet wird. Die Erzeugung von flüssigem Rücklauf für die Rohargonsäule und die Erzeugung von aufsteigendem Dampf für die Mitteldrucksäule wird somit in einem einzigen Wärmeaustauschvorgang durchgeführt. Es genügt also ein einziger Kondensator-Verdampfer für beide Funktionen. Dies bewirkt einerseits einen relativ geringen apparativen Aufwand; andererseits ist das Verfahren ist durch Verminderung der Austauschverluste energetisch besonders günstig.

Vorzugsweise wird das Kühlfluid bei dem indirekten Wärmeaustausch mit dem zweiten Stickstoff-Kopfgas aus der Mitteldrucksäule mindestens teilweise verdampft, und die dabei gebildete dampfförmige Fraktion in die Niederdrucksäule eingeleitet, insbesondere mit Hilfe eines Kaltgebläses.

Vorzugsweise weist die Mitteldrucksäule oberhalb der Zuspeisung der ersten sauerstoffangereicherten Fraktion Stoffaustauschelemente im Umfang von mindestens sieben theoretischen Böden, aufweist. Beispielsweise beträgt theoretische Bodenzahl oberhalb der Zuspeisestelle 7 bis 50, vorzugsweise 16 bis 22 theoretische Böden. Unterhalb der Zuspeisung der ersten sauerstoffangereicherten Fraktion weist die Mitteldrucksäule keine Stoffaustauschelemente auf, oder Stoffaustauschelemente im Umfang von einem bis fünf theoretischen Böden.

Die Erfindung betrifft außerdem eine Vorrichtung zur Argongewinnung gemäß Patentanspruch 9. Vorteilhafte Ausgestaltungen sind in den Patentansprüchen 10 bis 14 beschrieben.

Die Erfindung sowie weitere Einzelheiten der Erfindung werden im Folgenden anhand von in den Zeichnungen dargestellten Ausführungsbeispielen näher erläutert.

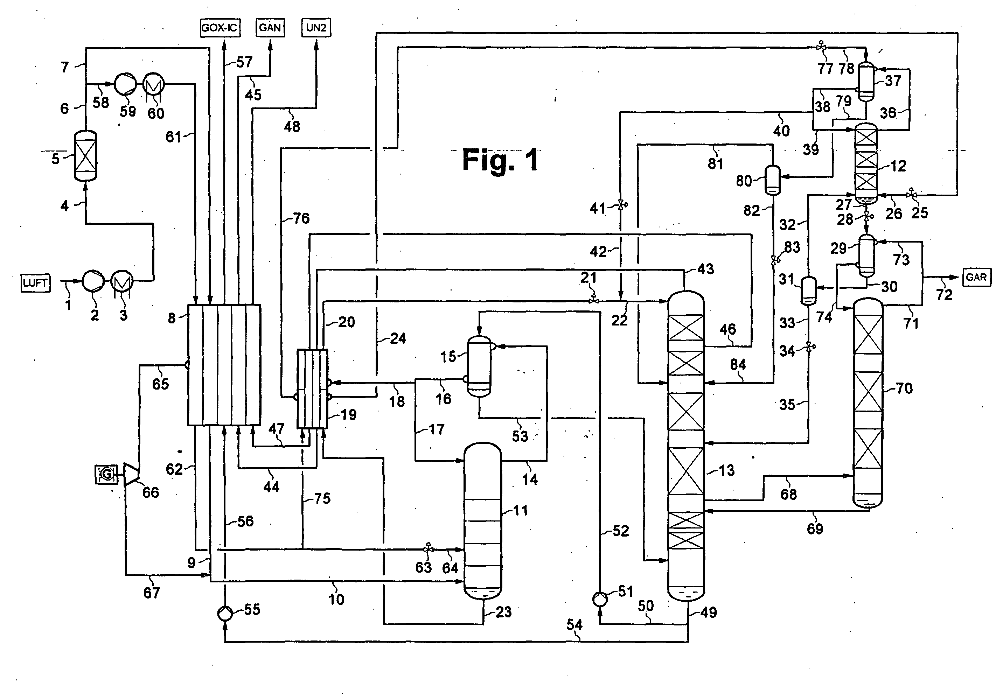

Bei dem in **Figur 1** dargestellten System wird atmosphärische Luft 1 in einem Luftverdichter 2 mit Nachkühlung 3 verdichtet. Die verdichtete Einsatzluft 4 wird einer Reinigungseinrichtung 5 zugeführt, die beispielsweise durch ein Paar von Molekularsieb-Adsorbem gebildet wird. Ein erster Teil 7 der gereinigten Luft 6 wird in einem Hauptwärmetauscher 8 auf etwa Taupunkt abgekühlt. Der abgekühlte erste Teil 9 der Luft wird mit einem anderen gasförmigen Luftstrom 67 vermischt. Das Gemisch bildet in dem Ausführungsbeispiel den "ersten Einsatzluftstrom", der über Leitung 10 ohne Drosselung der Hochdrucksäule 11 eines Drei-Säulen-Systems zugeführt wird. Das Drei-Säulen-System weist außerdem eine Mitteldrucksäule 12 und eine Niederdrucksäule 13 auf.

In dem Beispiel wird das gesamte Kopfprodukt der Hochdrucksäule 11 ("erstes Stickstoff-Kopfgas") über Leitung 14 in einen Hauptkondensator 15 geleitet und dort vollständig oder im Wesentlichen vollständig kondensiert. Dabei gebildeter flüssiger Stickstoff 16 wird zu einem ersten Teil 17 der Hochdrucksäule 11 als Rücklauf aufgegeben. Ein zweiter Teil 18 wird in einem Unterkühlungs-Gegenströmer 19 abgekühlt und über Leitung 20, Drosselventil 21 und Leitung 22 zum Kopf der Niederdrucksäule 13 geführt.

Im Sumpf der Hochdrucksäule 11 fällt eine erste sauerstoffangereicherte Flüssigkeit an, die über Leitung 23, Unterkühlungs-Gegenströmer 19, Leitung 24, Drosselventil 25 und Leitung 26 als "erste sauerstoffangereicherte Fraktion" in die Mitteldrucksäule 12 eingespeist wird. In dem Beispiel weist die Mitteldrucksäule 12 keine Stoffaustauschelemente unterhalb der Zuspeisung der ersten sauerstoffangereicherten Fraktion 26 auf; die Stoffaustauschelemente oberhalb der Zuspeisung werden durch geordnete Packung gebildet, die insgesamt 22 theoretischen Böden entspricht.

Das Sumpfprodukt der Mitteldrucksäule ("zweite sauerstoffangereicherte Flüssigkeit") wird über Leitung 27 und Regelventil 28 in den Verdampfungsraum eines Rohargon-Kondensators 29 geleitet, und dort teilweise verdampft. Das dabei gebildete Zwei-Phasen-Gemisch 30 wird in einen Abscheider (Phasentrenner) 31 eingeführt. Der dampfförmige Anteil 32 strömt als "sauerstoffangereicherter Dampf" zurück in die Mitteldrucksäule 12 und dient dort als aufsteigender Dampf. Die verbliebene Flüssigkeit 33 wird abgedrosselt (34) und der Niederdrucksäule 13 als sauerstoffangereicherter Einsatz 35 zugespeist.

Das zweite Stickstoff-Kopfgas, das sich am Kopf der Mitteldrucksäule 12 bildet, wird in dem Beispiel vollständig über Leitung 36 entnommen und im Verflüssigungsraum eines Mitteldrucksäulen-Kopfkondensators 37 vollständig kondensiert. Dabei gebildeter flüssiger Stickstoff 38 wird zu einem ersten Teil 39 der Mitteldrucksäule 12 als Rücklauf aufgegeben. Ein zweiter Teil 40 wird über Drosselventil 41 und Leitungen 42-22 zum Kopf der Niederdrucksäule 13 geführt und/oder wird direkt als Flüssigprodukt gewonnen (nicht dargestellt).

Dem oberen Bereich der Niederdrucksäule 13 werden gasförmiger Stickstoff 43-44-45 und Unrein-Stickstoff 46-47-48 entnommen, im Unterkühlungs-Gegenströmer 19 und im Hauptwärmetauscher 8 angewärmt und als Produkt (GAN) beziehungsweise Restgas (UN2) abgezogen.

Flüssiger Sauerstoff 49 aus dem Sumpf der Niederdrucksäule 13 wird zu einem ersten Teil 50-52 mittels einer Pumpe 51 in den Verdampfungsraum des Hauptkondensators 15 gefördert und dort teilweise verdampft. Das dabei entstehende Zwei-Phasen-Gemisch wird in den Sumpf der Niederdrucksäule 13 zurückgeleitet. Der Rest 54 der Niederdrucksäulen-SumpKlüssigkeit 49 wird in einer Innenverdichtungspumpe 55 auf den gewünschten Produktdruck gebracht, über Leitung 56 dem Hauptwärmetauscher 8 zugeführt, dort verdampft oder pseudo-verdampft und angewärmt und schließlich über Leitung 57 als gasförmiges Druckprodukt (GOX-IC) herausgeführt. Mittels der Innenverdichtung ist jeder gewünschte Produktdruck erreichbar. Er kann beispielsweise zwischen 3 und 120 bar liegen.

Die Wärme, die für die (Pseudo-)Verdampfung des innenverdichteten Sauerstoffs 56 benötigt wird, stellt ein zweiter Teil 62 der Einsatzluft zu Verfügung, der über Leitung 58 aus der gereinigten Einsatzluft 6 abgezweigt, in einem Nachverdichter 59 mit Nachkühler 60 auf den dafür benötigten hohen Druck gebracht und über Leitung 61 dem Hauptwärmetauscher 8 zugeführt wird. Der zweite Teil 62 der Einsatzluft wird mindestens teilweise als "zweiter Einsatzluftstrom" über Leitung 75, Unterkühlungs-Gegenströmer 19, Leitung 76, Drosselventil 77 und Leitung 78 in den Verdampfungsraum des Kopfkondensators 37 der Mitteldrucksäule eingeleitet, ohne vorher einer Phasentrennung oder einer anderen konzentrationsverändemden Maßnahme unterworfen zu werden. Im Mitteldrucksäulen-Kondensator 37 wird er teilweise verdampft. Das dabei gebildete Zwei-Phasen-Gemisch 79 wird in einen Abscheider (Phasentrenner) 80 eingeführt. Der dampfförmige Anteil 81 strömt in die Niederdrucksäule 13. Die verbliebene Flüssigkeit 82 wird über ein Ventil 83 ebenfalls der Niederdrucksäule 13 zugespeist (84). Die Zuspeisestelle liegt unterhalb des Unrein-Stickstoff-Abzugs 46 und oberhalb der Zuspeisung 35 der Mitteldrucksäulen-Sumpfflüssigkeit.

Der Rest der tiefkalten Hochdruckluft 62 wird auf Hochdrucksäulen-Druck abgedrosselt (63) und über Leitung 64 in die Hochdrucksäule 11 eingeleitet. Die Zuspeisestelle liegt vorzugsweise einige theoretische Böden oberhalb des Sumpfs, an dem die gasförmige Luft 10 eingeführt wird.

Ein Teil 65 der gereinigten Einsatzluft 6 wird gemeinsam mit dem zweiten Teil 62 nachverdichtet und in den Hauptwärmetauscher 8 eingeführt (58-59-60-61), dann aber bei einer Zwischentemperatur wieder entnommen und einer Entspannungsmaschine 66 zugeführt, die in dem Beispiel als Generator-Turbine ausgestaltet ist. Der arbeitsleistend entspannte dritte Teil 67 der Einsatzluft wird gemeinsam mit dem ersten Teil 9 als "erster Einsatzluftstrom" 10 zur Hochdrucksäule 11 geleitet.

Die Niederdrucksäule 13 kommuniziert über eine Gasleitung 68 und eine Flüssigkeitsleitung 69 mit einer Rohargonsäule 70. Über 68 wird eine argonhaltige Fraktion gasförmig in die Rohargonsäule eingeführt und dort in eine Rohargon-Kopffraktion und eine sauerstoffreiche Flüssigkeit im Sumpf getrennt. In dem Beispiel wird ein erster Teil 72 der gasförmigen Rohargon-Kopffraktion 71 als Rohargon-Produkt (GAR) gewonnen. Es kann gegebenenfalls weiter gereinigt werden, beispielsweise in einer Reinargonsäule (nicht dargestellt). Der Rest 73 wird im Rohargon-Kondensator 29 vollständig oder im Wesentlichen vollständig verflüssigt und über Leitung 74 als Rücklauf auf den Kopf der Rohargonsäule 70 aufgegeben.

Alle drei Kondensator-Verdampfer 15, 29, 37 sind in dem Beispiel.als Fallfilmverdampfer ausgebildet. Jeder kann im Rahmen der Erfindung jedoch auch durch einen anderen Verdampfer-Typ realisiert werden, beispielsweise einen Umlaufverdampfer (Thermosiphon-Verdampfer). Wenn beispielsweise der Rohargon-Kondensator als Umlaufverdampfer ausgestaltet wird, kann er unmittelbar im Sumpf der Mitteldrucksäule 12 angeordnet werden. Rohargonsäule 70 und Mitteldrucksäule 12 könnten damit auch apparativ als Doppelsäule angeordnet werden und beispielsweise in einem gemeinsamen Behälter untergebracht sein.

Im Rahmen der Erfindung ist es allerdings meist vorteilhafter, gerade an dieser Stelle einen Fallfilmverdampfer einzusetzen und dessen geringe Temperaturdifferenz zur Optimierung der Säulendrücke auszunutzen. Wenn Niederdrucksäule 13, Mitteldrucksäule 12, Rohargon-Kondensator 29 und Rohargonsäule 70 wie in der Zeichnung dargestellt übereinander angeordnet sind, kann sogar die ansonsten bei Fallfilmverdampfern erforderliche Umwälzpumpe (siehe Pumpe 51 für den Hauptkondensator 15) entfallen. Die Flüssigkeit fließt allein aufgrund des statischen Drucks über die Leitungen 27, 30, 33, 35 aus der Mitteldrucksäule 12 über Rohargon-Kondensator 29 in die Niederdrucksäule 13. Auch auf der Verflüssigungsseite wird keine Pumpe benötigt.

Die Betriebsdrücke der Säulen (jeweils am Kopf) betragen:
Hochdrucksäule 11 beispielsweise 4 bis 12 bar, vorzugsweise etwa 6 bar
Mitteldrucksäule 12 beispielsweise 1,2 bis 2 bar, vorzugsweise etwa 1,4 bar
Niederdrucksäule 13 beispielsweise 1,2 bis 2 bar, vorzugsweise etwa 1,6 bar

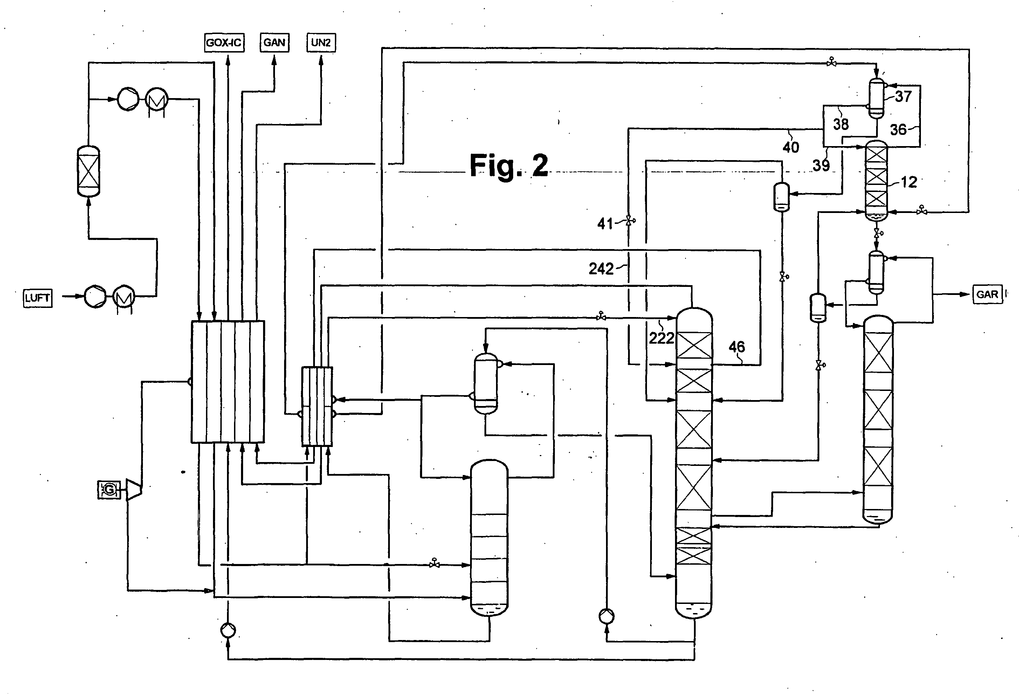

Im Prozess von **Figur 2** weist die Mitteldrucksäule 12 weniger theoretische Böden auf, beispielweise 12 . Das Kopfprodukt 36 und die im Kopfkondensator 37 der Mitteldrucksäule gebildete Flüssigkeit 38, 39, 40 weisen daher eine geringerer Reinheit auf als der Stickstoff aus der Hochdrucksäule beziehungsweise dem Hauptkondensator, der über Leitung 222 auf den Kopf der Niederdrucksäule aufgegeben wird. Der in 41 gedrosselte flüssige Mitteldrucksäulen-Stickstoff 242 wird daher an einer Zwischenstelle in die Niederdrucksäule eingeführt, in dem dargestellten Beispiel etwa auf Höhe der Entnahme des Unrein-Stickstoffs.

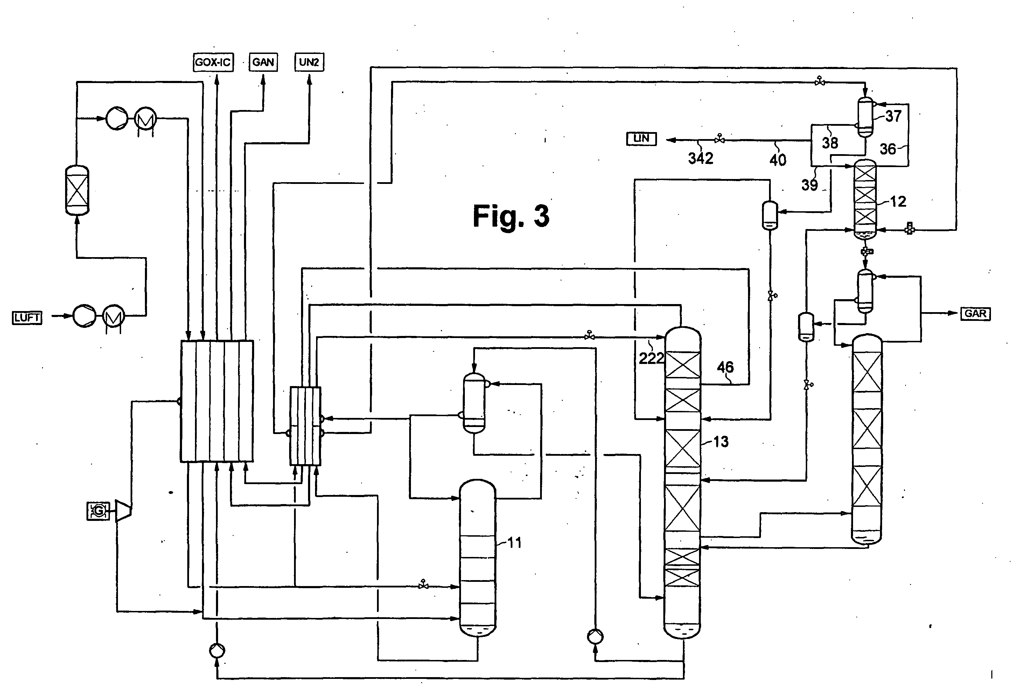

In **Figur 3** wird der gesamte Mitteldrucksäulen-Stickstoff 40, der nicht als Rücklauf 39 in der Mitteldrucksäule 12 eingesetzt wird, als Flüssigprodukt (LIN) über Leitung 342 abgezogen. Die Bodenzahl in der Mitteldrucksäule 12 kann damit auf die Produktanforderung ausgerichtet werden. Da kein Mitteldrucksäulen-Stickstoff in die Niederdrucksäule eingeleitet wird, kann die Produktreinheit in der Mitteldrucksäule unabhängig von den Konzentrationen der Kopffraktionen in Hochdrucksäule 11 und Niederdrucksäule 13 ausgelegt werden. Umgekehrt werden die Produkte der Niederdrucksäule nicht von etwaigen Schwankungen im Betrieb der Mitteldrucksäule beeinflusst.

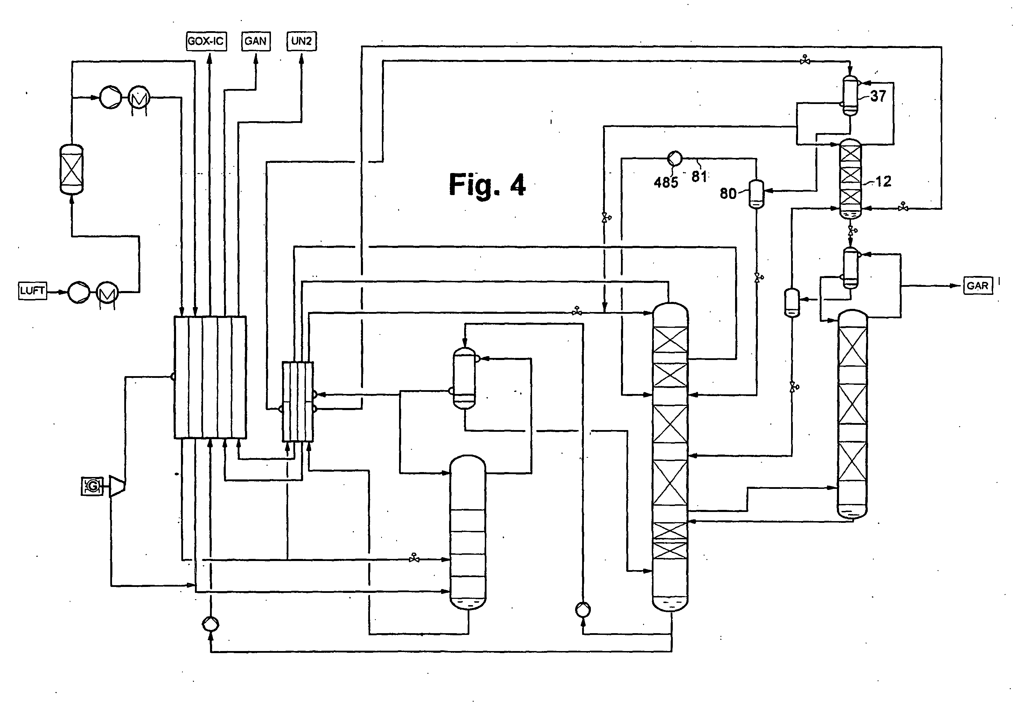

Aufgrund der Temperatur- und Druckdifferenzen und der Konzentrationen kann der Druck auf der Verdampfungsseite des Kopfkondensators 37 der Mitteldrucksäule 12 niedriger als der Betriebsdruck der Niederdrucksäule 13 sein. In diesem Fall kann die Kondensator-Konfiguration von Figur 2 dennoch eingesetzt werden, wenn der Dampf 81 aus dem Abscheider 80 mittels eines Kaltgebläses 485 in die Niederdrucksäule gedrückt wird, wie es in **Figur 4** dargestellt ist.

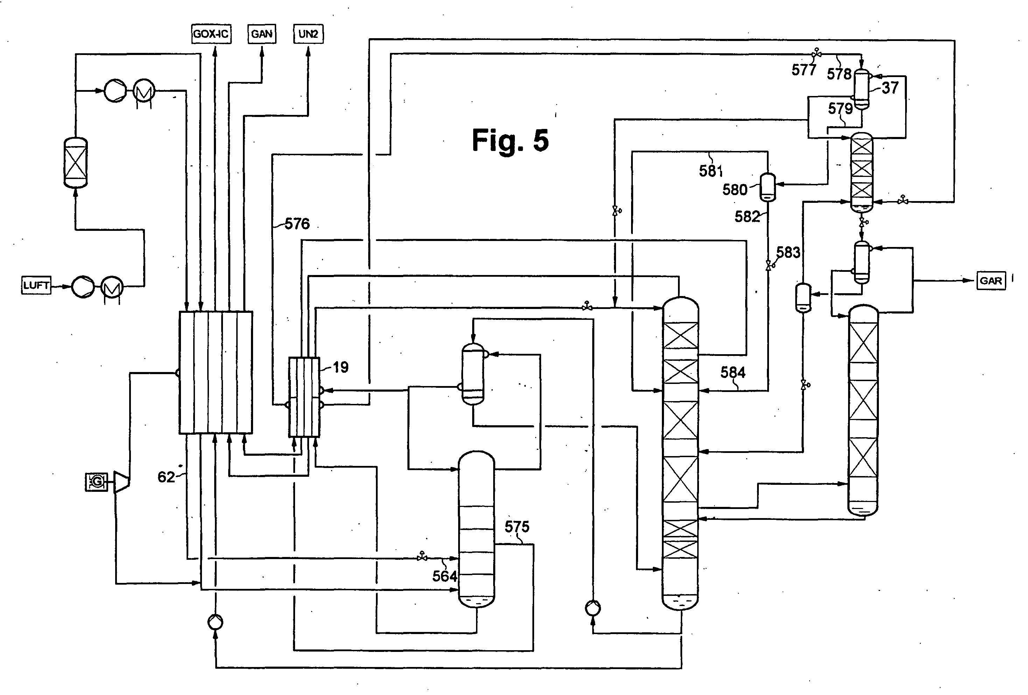

Das Ausführungsbeispiel von **Figur 5** stellt eine andere Abwandlung des Verfahrens nach Figur 1 dar. Hier wird die gesamte tiefkalte Hochdruckluft über Leitung 564 in die Hochdrucksäule eingeführt. Das Kühlfluid für den Kopfkondensator 37 der Mitteldrucksäule wird durch eine Zwischenflüssigkeit 575 der Hochdrucksäule gebildet, die über den Unterkühlungs-Gegenströmer 19, Leitung 576, Drosselventil 577 und Leitung 578 herangeführt wird. Die Stromführung stromabwärts des Verdampfungsraums des Kopfkondensators 37 (579 bis 584) ist analog zu Figur 1. Die Zwischenflüssigkeit 575 wird in dem Beispiel etwas oberhalb der Zuspeisung der Flüssigluft 564 abgenommen. Vorzugsweise liegen etwa 2 bis 10 theoretische Böden zwischen den beiden Anstichen. Alternativ ist eine Entnahme auf Höhe der Flüssigluftzuspeisung oder etwas darunter möglich.

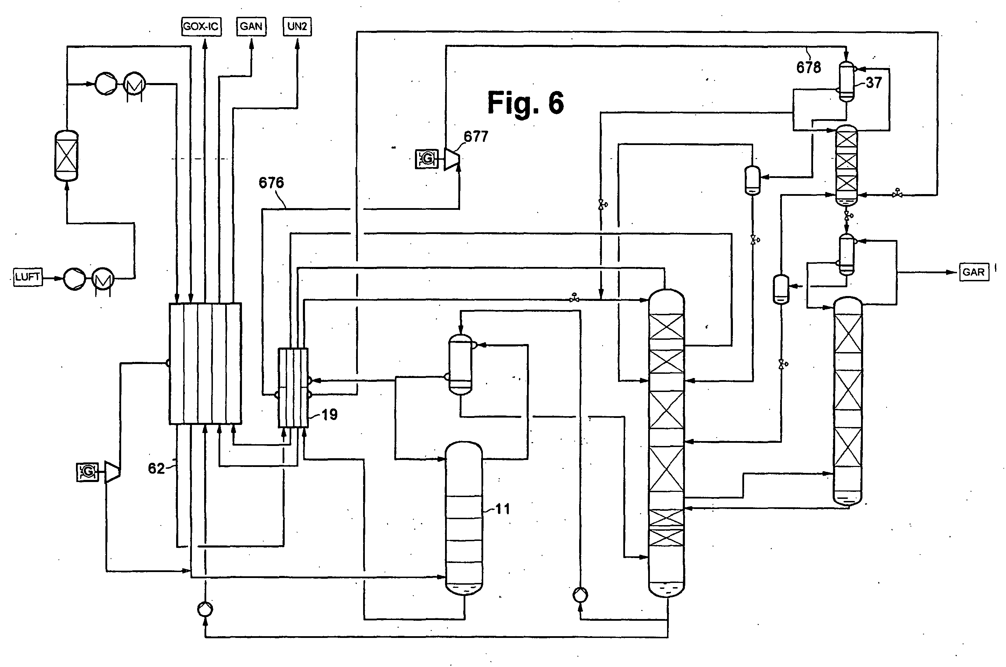

In **Figur 6** wird der zweite Einsatzluftstrom 676 vor der Einleitung 678 in den Verdampfungsraum des Kopfkondensators 37 der Mitteldrucksäule nicht über ein Drosselventil (77 in Figur 1) entspannt, sondern in einer Flüssigturbine 677. Die dabei geleistete Arbeit wird in dem dargestellten Beispiel mittels eines Generators in elektrische Energie umgewandelt. In dem Ausführungsbeispiel von Figur 6 wird die gesamte tiefkalte Hochdruckluft 62 in die Flüssigturbine 677 und weiter zum Kopfkondensator 37 geleitet. Es strömt keine Flüssigluft in die Hochdrucksäule 11.

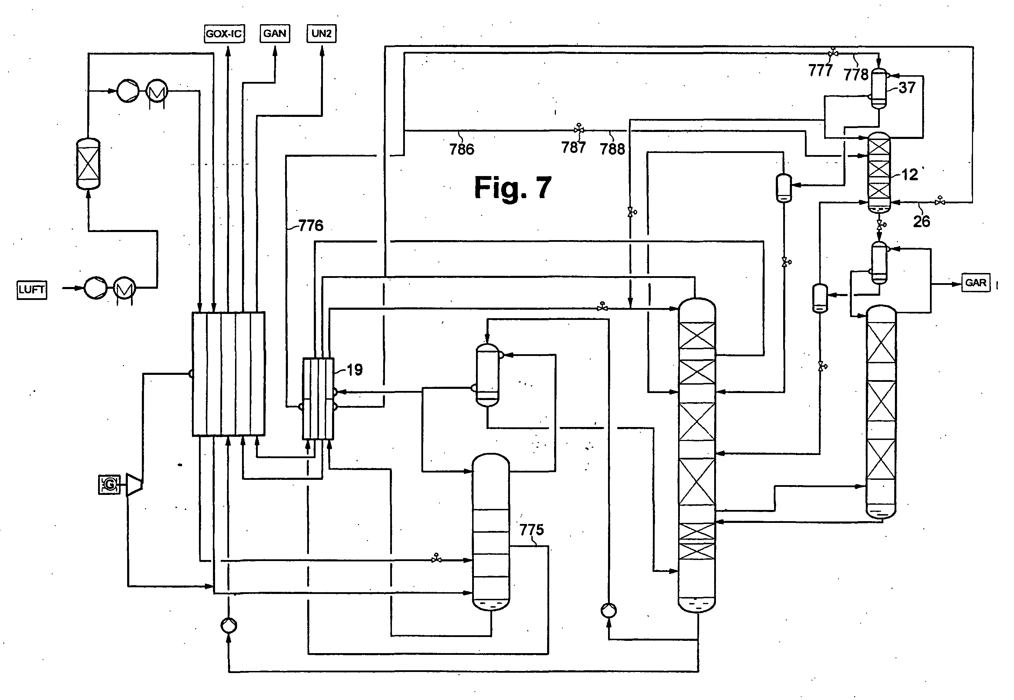

Im Unterschied zu Figur 5 wird bei dem in **Figur 7** dargestellten Verfahren nicht die gesamte Zwischenflüssigkeit 775, 776 aus der Hochdrucksäule über 777-778 in den Verdampfungsraum des Kopfkondensators 37 der Mitteldrucksäule geführt. Vielmehr strömt ein Teil 786-787-788 als "Zusatzfraktion" ins Innere der Mitteldrucksäule 12. Die Einspeisestelle der weiteren Einsatzfraktion 788 liegt oberhalb der Zuspeisung 26 der Hochdrucksäulen-Sumpfflüssigkeit. Alternativ kann die gesamte Zwischenflüssigkeit 775, 776 in die Mitteldrucksäule 12 eingeleitet (788) werden. Das Kühlfluid für den Mitteldrucksäulen-Kopfkondensator 37 wird dann durch ein anderes Fluid gebildet, beispielsweise durch verflüssigte Einsatzluft (siehe z.B. Figur 1), durch Hochdrucksäulen-Sumpfflüssigkeit, durch Flüssigkeit von einer anderen Zwischenstelle der Hochdrucksäule oder durch eine sauerstoffangereicherte Flüssigkeit aus Mitteldrucksäule oder Niederdrucksäule.

Wie für den Fachmann unmittelbar ersichtlich ist, sind im Rahmen der Erfindung weitere Kombinationen der in den Ausführungsbeispielen geschilderten Einzelmerkmale möglich.

Die Ausführungsbeispiele können auch ohne Argongewinnung realisiert werden, indem, auf die Leitungen 68 und 69 sowie auf die Rohargonsäule 70 verzichtet wird. Der Kondensator-Verdampfer 29, der als Sumpfverdampfer für die Mitteldrucksäule 12 dient, wird dann mit einem anderen Medium beheizt, beispielsweise mit gasförmigem Stickstoff aus der Hochdrucksäule 11, der aus Leitung 14 abgezweigt wird, mit einer gasförmigen Zwischenfraktion aus der Hochdrucksäule 11 oder mit einem Teil der gasförmigen Einsatzluft in Leitung 10.

## Patentansprüche

1. Verfahren zur Tieftemperatur-Luftzerlegung mit einem Drei-Säulen-System, das eine Hochdrucksäule (11), eine Niederdrucksäule (13) und eine Mitteldrucksäule (12) aufweist, wobei bei dem Verfahren
(a) ein erster Einsatzluftstrom (10, 64, 564) in die Hochdrucksäule (11) eingeleitet und dort in eine erste sauerstoffangereicherte Flüssigkeit und eine erstes Stickstoff-Kopfgas getrennt wird,
(b) eine erste sauerstoffangereicherte Fraktion (23, 24, 26) aus der Hochdrucksäule (11) in die Mitteldrucksäule (12) eingeleitet und dort in eine zweite sauerstoffangereicherte Flüssigkeit und ein zweites Stickstoff-Kopfgas getrennt wird,
(c) eine zweite sauerstoffangereicherte Fraktion (33, 35) aus der Hochdrucksäule und/oder aus der Mitteldrucksäule (12) in die Niederdrucksäule (13) eingeleitet und dort in eine dritte sauerstoffangereicherte Flüssigkeit und ein drittes Stickstoff-Kopfgas getrennt wird,
(d) der Niederdrucksäule (13) ein Stickstoff-Produktstrom und/oder ein Sauerstoff-Produktstrom entnommen wird,
(e) mindestens ein Teil (36) des zweiten Stickstoff-Kopfgases aus der Mitteldrucksäule (12) durch indirekten Wärmeaustausch (37) mit einem Kühlfluid (78, 578, 678, 778) mindestens teilweise kondensiert wird,
**dadurch gekennzeichnet, dass**
(f1) ein zweiter Einsatzluftstrom (62, 75, 76, 676) verflüssigt und anschließend als Kühlfluid (78) für die Kondensation des zweiten Stickstoff-Kopfgases (36) aus der Mitteldrucksäule (12) eingesetzt wird und/oder
(f2) eine Flüssigkeit (575, 576, 775, 776) von einer Zwischenstelle der Hochdrucksäule (11), als Kühlfluid (578, 778) für die Kondensation des zweiten Stickstoff-Kopfgases (36) aus der Mitteldrucksäule (12) eingesetzt wird.

2. Verfahren nach Anspruch 1, bei dem das Kühlfluid (78, 578, 678, 778) bei dem indirekten Wärmeaustausch (37) nur teilweise verdampft wird und das resultierende Zwei-Phasen-Gemisch (79, 579) in eine Phasentrenneinrichtung (80, 580) eingeleitet wird, in der eine dampfförmige Fraktion (81, 581) und ein flüssig verbliebener Anteil (82, 582) voneinander getrennt werden.

3. Verfahren nach Anspruch 1 oder 2, **dadurch gekennzeichnet, dass** das Kühlfluid (678) stromaufwärts des indirekten Wärmeaustauschs (37) arbeitsleistend entspannt (677) wird.

4. Verfahren nach einem der Ansprüche 1 bis 3, **dadurch gekennzeichnet, dass** eine Zusatzfraktion (786, 788), die eine andere Zusammensetzung als die erste sauerstoffangereicherte Fraktion (26) aufweist, aus der Hochdrucksäule (12) abgezogen (775, 776) und der Mitteldrucksäule (12) zugespeist wird.

5. Verfahren nach Anspruch 4, **dadurch gekennzeichnet, dass** die Zusatzfraktion (786, 788) und das Kühlfluid (778) von derselben Zwischenstelle der Hochdrucksäule (11) abgezogen (775, 776) werden.

6. Verfahren nach einem der Ansprüche 1 bis 5, **dadurch gekennzeichnet, dass** eine argonhaltige Fraktion (68) aus dem Drei-Säulen-System in eine Rohargonsäule (70) eingeführt und dort in eine Rohargon-Kopffraktion und eine sauerstoffreiche Flüssigkeit getrennt wird, wobei eine Fraktion (72) aus dem oberen Bereich der Rohargonsäule (70) und/oder ein Teil der Rohargon-Kopffraktion stromabwärts des Rohargon-Kondensators als Rohargon-Produkt gewonnen wird.

7. Verfahren nach Anspruch 6, **dadurch gekennzeichnet, dass** mindestens ein Teil (73) der Rohargon-Kopffraktion (71) in einen Rohargon-Kondensator (29) geleitet und dort durch indirekten Wärmeaustausch mit mindestens einem Teil (27) der zweiten sauerstoffangereicherten Flüssigkeit aus der Mitteldrucksäule (12) mindestens teilweise kondensiert wird, wobei insbesondere im Rohargon-Kondensator (29) gebildeter sauerstoffangereicherter Dampf (32) in die Mitteldrucksäule (12) zurückgeleitet wird.

8. Verfahren nach einem der Ansprüche 1 bis 7, **dadurch gekennzeichnet, dass** das Kühlfluid (78, 578, 678, 778) bei dem indirekten Wärmeaustausch (37) mit dem zweiten Stickstoff-Kopfgas (36) aus der Mitteldrucksäule (12) mindestens teilweise verdampft wird und die dabei gebildete dampfförmige Fraktion (81, 581) in die Niederdrucksäule (13) eingeleitet wird, insbesondere mit Hilfe eines Kaltgebläses (485).

9. Vorrichtung zur Tieftemperatur-Luftzerlegung mit einem Drei-Säulen-System, das eine Hochdrucksäule (11), eine Niederdrucksäule (13) und eine Mitteldrucksäule (12) aufweist, mit
(a) einer ersten Einsatzluft-Leitung (10, 64, 564) zur Einleitung eines ersten Einsatzluftstroms in die Hochdrucksäule (11),
(b) einer ersten Rohsauerstoff-Leitung (23, 24, 26) zur Einleitung einer ersten sauerstoffangereicherte Fraktion aus der Hochdrucksäule (11) in die Mitteldrucksäule (12),
(c) einer zweiten Rohsauerstoff-Leitung (33, 35) zur Einleitung einer zweiten sauerstoffangereicherten Fraktion aus der Hochdrucksäule und/oder aus der Mitteldrucksäule (12) in die Niederdrucksäule (13),
(d) mindestens einer Produktleitung für einen Stickstoff-Produktstrom und/oder einen Sauerstoff-Produktstrom, die mit der Niederdrucksäule verbunden ist, und mit
(e) Mitteldrucksäulen-Kondensator (37), dessen Verflüssigungsraum mit dem oberen Bereich der Mitteldrucksäule (12) verbunden (36) ist,
**dadurch gekennzeichnet, dass** der Mitteldrucksäulen-Kondensator (37) einen Verdampfungsraum aufweist, der mit einer Zuleitung (78, 578, 678, 778) für ein flüssiges Kühlfluid verbunden ist, wobei die Zuleitung
(f1) mit einer zweiten Einsatzluft-Leitung (62, 75) für verflüssigte Einsatzluft und/oder
(f2) mit einer Zwischenstelle der Hochdrucksäule (11) verbunden (76, 676, 575, 576, 775, 776) ist.

10. Vorrichtung nach Anspruch 9, **gekennzeichnet durch** eine Flüssigturbine (677), die in der Zuleitung (676, 678) angeordnet ist.

11. Vorrichtung nach Anspruch 9 oder 14, **gekennzeichnet durch** eine Zusatzeinsatzleitung (775, 776, 786, 788) zur Einleitung einer Zusatzfraktion, die eine andere Zusammensetzung als die erste sauerstoffangereicherte Fraktion (26) aufweist, aus der Hochdrucksäule (12) in die Mitteldrucksäule (12).

12. Vorrichtung nach einem der Ansprüche 9 bis 11, **dadurch gekennzeichnet, dass** die Zuleitung (775, 776, 778) für den Mitteldrucksäulen-Kopfkondensator (37) und die Zusatzeinsatzleitung (775, 776, 786, 788) mindestens teilweise durch eine gemeinsame Leitung (775, 776) gebildet werden.

13. Vorrichtung nach einem der Ansprüche 9 bis 12, **dadurch gekennzeichnet, dass** der Mitteldrucksäulen-Kondensator als Fallfilmverdampfer ausgebildet ist.

14. Vorrichtung nach Anspruch 13, **dadurch gekennzeichnet, dass** stromabwärts des Verdampfungsraums des Mitteldrucksäulen-Kondensators (37) eine Phasentrenneinrichtung (80, 580) angeordnet ist, deren Dampfraum mit der Niederdrucksäule (13) verbunden (81, 581) ist, insbesondere über ein Kaltgebläse (485).

## Claims

1. Process for the low-temperature fractionation of air using a three-column system, which has a high-pressure column (11), a low-pressure column (13) and a medium-pressure column (12), in which process
(a) a first feed air stream (10, 64, 564) is introduced into the high-pressure column (11), where it is separated into a first oxygen-enriched liquid and a first nitrogen top gas,
(b) a first oxygen-enriched fraction (23, 24, 26) from the high-pressure column (11) is introduced into the medium-pressure column (12) where it is separated into a second oxygen-enriched liquid and a second nitrogen top gas,
(c) a second oxygen-enriched fraction (33, 35) from the high-pressure column and/or from the medium-pressure column (12) is introduced into the low-pressure column (13), where it is separated into a third oxygen-enriched liquid and a third nitrogen top gas,
(d) a nitrogen product stream and/or an oxygen product stream is removed from the low-pressure column (13),
(e) at least a portion (36) of the second nitrogen top gas from the medium-pressure column (12) is at least partially condensed by indirect heat exchange (37) with a cooling fluid (78, 578, 678, 778),
**characterized in that**
(f1) a second feed air stream (62, 75, 76, 676) is liquefied and is then used as cooling fluid (78) for the condensation of the second nitrogen top gas (36) from the medium-pressure column (12), and/or
(f2) a liquid (575, 576, 775, 776) from an intermediate point of the high-pressure column (11) is used as cooling fluid (578, 778) for the condensation of the second nitrogen top gas (36) from the medium-pressure column (12).

2. Process according to Claim 1, in which the cooling fluid (78, 578, 678, 778) is only partially evaporated during the indirect heat exchange (37), and the resulting two-phase mixture (79, 579) is introduced into a phase-separation device (80, 580) in which a fraction (81, 581) which is in vapour form and a proportion (82, 582) which has remained in liquid form are separated from one another.

3. Process according to Claim 1 or 2, **characterized in that** the cooling fluid (678) undergoes work-performing expansion (677) upstream of the indirect heat exchange (37).

4. Process according to one of Claims 1 to 3, **characterized in that** an additional fraction (786, 788), which has a different composition from the first oxygen-enriched fraction (26), is extracted (775, 776) from the high-pressure column (12) and is fed to the medium-pressure column (12).

5. Process according to Claim 4, **characterized in that** the additional fraction (786, 788) and the cooling fluid (778) are extracted (775, 776) from the same intermediate point of the high-pressure column (11).

6. Process according to one of Claims 1 to 5, **characterized in that** an argon-containing fraction (68) from the three-column system is introduced into a crude argon column (70), where it is separated into a crude argon top fraction and an oxygen-rich liquid, a fraction (72) from the upper region of the crude argon column (70) and/or a part of the crude argon top fraction downstream of the crude argon condenser being obtained as crude argon product.

7. Process according to Claim 6, **characterized in that** at least a part (73) of the crude argon top fraction (71) is passed into a crude argon condenser (29), where it is at least partially condensed by indirect heat exchange with at least a part (27) of the second oxygen-enriched liquid from the medium-pressure column (12), oxygen-enriched vapour (32) which is formed in particular in the crude argon condenser (29) being returned to the medium-pressure column (12).

8. Process according to one of Claims 1 to 7, **characterized in that** the cooling fluid (78, 578, 678, 778) is at least partially evaporated during the indirect heat exchange (37) with the second nitrogen top gas (36) from the medium-pressure column (12), and the fraction (81, 581) in vapour form which is formed in the process is introduced into the low-pressure column (13), in particular with the aid of a cold fan (485).

9. Apparatus for the low-temperature fractionation of air, having a three-column system which has a high-pressure column (11), a low-pressure column (13) and a medium-pressure column (12), having
(a) a first feed air line (10, 64, 564) for introducing a first feed air stream into the high-pressure column (11),
(b) a first crude oxygen line (23, 24, 26) for introducing a first oxygen-enriched fraction from the high-pressure column (11) into the medium-pressure column (12),
(c) a second crude oxygen line (33, 35) for introducing a second oxygen-enriched fraction from the high-pressure column and/or from the medium-pressure column (12) into the low-pressure column (13),
(d) at least one product line for a nitrogen product stream and/or an oxygen product stream which is connected to the low-pressure column, and having
(e) medium-pressure column condenser (37), the liquid fraction space of which is connected (36) to the upper region of the medium-pressure column (12),
**characterized in that** the medium-pressure column condenser (37) has an evaporation space, which is connected to a feedline (78, 578, 678, 778) for a liquid cooling fluid, the feedline being connected (76, 676, 575, 576, 775, 776)
(f1) to a second feed air line (62, 75) for liquefied feed air, and/or
(f2) to an intermediate point of the high-pressure column (11).

10. Apparatus according to Claim 9, **characterized by** a liquid turbine (677) which is arranged in the feedline (676, 678).

11. Device according to Claim 9 or 14, **characterized by** an additional charge line (775, 776, 786, 788) for introducing an additional fraction, which have a different composition from the first oxygen-enriched fraction (26), from the high-pressure column (12) into the medium-pressure column (12).

12. Apparatus according to one of Claims 9 to 11, **characterized in that** the feedline (775, 776, 778) for the medium-pressure column top condenser (37) and the additional charge line (775, 776, 786, 788) are at least partially formed by a common line (775, 776).

13. Apparatus according to one of Claims 9 to 12, **characterized in that** the medium-pressure column condenser is designed as a falling-film evaporator.

14. Apparatus according to Claim 13, **characterized in that** a phase-separation device (80, 580), the vapour space of which is connected (81, 581) to the low-pressure column (13), in particular via a cold fan (485), is arranged downstream of the evaporation space of the medium-pressure column condenser (37).

## Revendications

1. Procédé de séparation d'air cryogénique comprenant un système à trois colonnes, qui présente une colonne haute pression (11), une colonne basse pression (13) et une colonne moyenne pression (12), où, dans le procédé :
(a) un premier courant d'air de charge (10, 64, 564) est introduit dans la colonne haute pression (11) et y est séparé en un premier liquide enrichi en oxygène et en un premier gaz de tête à base d'azote,
(b) une première fraction enrichie en oxygène (23, 24, 26) est amenée de la colonne haute pression (11) dans la colonne moyenne pression (12) et y est séparée en un deuxième liquide enrichi en oxygène et en un deuxième gaz de tête à base d'azote,
(c) une deuxième fraction enrichie en oxygène (33, 35) est amenée de la colonne haute pression et/ou de la colonne moyenne pression (12) dans la colonne basse pression (13) et y est séparée en un troisième liquide enrichi en oxygène et en un troisième gaz de tête à base d'azote,
(d) on prélève de la colonne basse pression (13) un courant de produit à base d'azote et/ou un courant de produit à base d'oxygène,
(e) au moins une partie (36) du deuxième gaz de tête à base d'azote provenant de la colonne moyenne pression (12) est condensée au moins partiellement par échange thermique indirect (37) avec un fluide de refroidissement (78, 578, 678, 778),
**caractérisé en ce que**
(f1) un deuxième courant d'air de charge (62, 75, 76, 676) est liquéfié et est ensuite utilisé comme fluide de refroidissement (78) pour la condensation du deuxième gaz de tête à base d'azote (36) provenant de la colonne moyenne pression (12) et/ou
(f2) un liquide (575, 576, 775, 776) provenant d'une position intermédiaire de la colonne haute pression (11) est utilisé comme fluide de refroidissement (578, 778) pour la condensation du deuxième gaz de tête à base d'azote (36) provenant de la colonne moyenne pression (12).

2. Procédé selon la revendication 1, dans lequel le fluide de refroidissement (78, 578, 678, 778) lors de l'échange thermique indirect (37) n'est que partiellement évaporé et le mélange biphasique résultant (79, 579) est introduit dans un dispositif de séparation de phases (80, 580) dans lequel une fraction sous forme de vapeur (81, 581) et une proportion restant sous forme liquide (82, 582) sont séparées l'une de l'autre.

3. Procédé selon la revendication 1 ou 2, **caractérisé en ce que** le fluide de refroidissement (678) est détendu (677) en fournissant de l'énergie en amont de l'échange thermique indirect (37).

4. Procédé selon l'une quelconque des revendications 1 à 3, **caractérisé en ce qu'**une fraction supplémentaire (786, 788), qui présente une composition différente de celle de la première fraction (26) enrichie en oxygène, est extraite (775, 776) de la colonne haute pression (11) et est introduite dans la colonne moyenne pression (12).

5. Procédé selon la revendication 4, **caractérisé en ce que** la fraction supplémentaire (786, 788) et le fluide de refroidissement (778) sont extraits (775, 776) de la même position intermédiaire de la colonne haute pression (11).

6. Procédé selon l'une quelconque des revendications 1 à 5, **caractérisé en ce qu'**une fraction contenant de l'argon (68) provenant du système à trois colonnes est introduite dans une colonne d'argon brut (70) et y est séparée en une fraction de tête d'argon brut et un liquide riche en oxygène, une fraction (72) étant obtenue de la partie supérieure de la colonne d'argon brut (70) et/ou une partie de la fraction de tête d'argon brut étant obtenue sous forme de produit d'argon brut en avant du condenseur d'argon brut.

7. Procédé selon la revendication 6, **caractérisé en ce qu'**au moins une partie (73) de la fraction de tête d'argon brut (71) est introduite dans un condenseur d'argon brut (29) et y est au moins partiellement condensée par échange thermique indirect avec au moins une partie (27) du deuxième liquide enrichi en oxygène provenant de la colonne moyenne pression (12), la valeur enrichie en oxygène (32) formée dans le condenseur d'argon brut (29) étant notamment réintroduite dans la colonne moyenne pression (12).

8. Procédé selon l'une quelconque des revendications 1 à 7, **caractérisé en ce que** le fluide de refroidissement (78, 578, 678, 778), lors de l'échange thermique indirect (37) avec le deuxième gaz de tête à base d'azote (36) provenant de la colonne moyenne pression (12) est évaporé au moins partiellement et la fraction sous forme de vapeur ainsi formée (81, 581) est introduite dans la colonne basse pression (13), notamment à l'aide d'une soufflante d'air froid (485).

9. Dispositif de séparation d'air cryogénique comprenant un système à trois colonnes, qui présente une colonne haute pression (11), une colonne basse pression (13) et une colonne moyenne pression (12), avec
(a) une première conduite d'air de charge (10, 64, 564) pour l'introduction d'un premier courant d'air de charge dans la colonne haute pression (11),
(b) une première conduite d'oxygène brut (23, 24, 26) pour l'introduction d'une première fraction enrichie en oxygène de la colonne haute pression (11) dans la colonne moyenne pression (12),
(c) une deuxième conduite d'oxygène brut (33, 35) pour l'introduction d'une deuxième fraction enrichie en oxygène de la colonne haute pression et/ou de la colonne moyenne pression (12) dans la colonne basse pression (13),
(d) au moins une conduite de produit pour un courant de produit à base d'azote et/ou un courant de produit à base d'oxygène, qui est reliée à la colonne basse pression, et avec
(e) un condenseur de colonne moyenne pression (37) dont la chambre de liquéfaction est reliée (36) à la partie supérieure de la colonne moyenne pression (12),
**caractérisé en ce que** le condenseur de colonne moyenne pression (37) présente une chambre d'évaporation qui est reliée à une conduite d'amenée (78, 578, 678, 778) pour un fluide de refroidissement liquide, la conduite d'amenée
(f1) est connectée (76, 676, 575, 576, 775, 776) à une deuxième conduite d'air de charge (62, 75) pour l'air de charge liquéfié et/ou
(f2) à une position intermédiaire de la colonne haute pression (11).

10. Dispositif selon la revendication 9, **caractérisé par** une turbine à fluide (677) qui est disposée dans la conduite d'amenée (676, 678).

11. Dispositif selon la revendication 9 ou 14,
**caractérisé par** une conduite de charge supplémentaire (775, 776, 786, 788) pour l'introduction d'une fraction supplémentaire, qui présente une composition différente de celle de la première fraction enrichie en oxygène (26), de la colonne haute pression (11) dans la colonne moyenne pression (12).

12. Dispositif selon l'une quelconque des revendications 9 à 11, **caractérisé en ce que** la conduite d'amenée (775, 776, 778) pour le condenseur de tête de la colonne moyenne pression (37) et la conduite de charge supplémentaire (775, 776, 786, 788) sont formées au moins en partie par une conduite commune (775, 776).

13. Dispositif selon l'une quelconque des revendications 9 à 12, **caractérisé en ce que** le condenseur de la colonne moyenne pression est réalisé sous forme d'évaporateur à film tombant.

14. Dispositif selon la revendication 13, **caractérisé en ce qu'**en aval de la chambre d'évaporation du condenseur de la colonne moyenne pression (37) est disposé un dispositif de séparation de phases (80, 580) dont la chambre de vapeur est reliée (81, 581) à la colonne basse pression (13), notamment par le biais d'une soufflante d'air froid (485).
